# EUROPÄISCHE PATENTSCHRIFT

(11) **EP 1 442 920 B1**
(45) Veröffentlichungstag und Bekanntmachung des Hinweises auf die Patenterteilung: **29.06.2016**
(21) Anmeldenummer: 04090003.7
(22) Anmeldetag: 07.01.2004
(51) Int. Cl.: B60K 35/00

(54) **Vorrichtung und Verfahren für einen Funktionszugriff in einem Kraftfahrzeug**
Device and method for access to a function of a vehicle
Dispositif et procédé d'accès à une fonction d'un automobile

(30) Priorität: 29.01.2003 DE 10304191
(43) Veröffentlichungstag der Anmeldung: 04.08.2004
(73) Patentinhaber: Volkswagen Aktiengesellschaft, 38440 Wolfsburg (DE)
(72) Erfinder: Krüger, Jens, 38518 Gifhorn (DE); Wengelnik, Heino, 38442 Wolfsburg (DE); Heimermann, Matthias, 38302 Wolfenbüttel (DE)
(74) Vertreter: Patentanwälte Bressel und Partner mbB

(56) Entgegenhaltungen:
- EP-A2- 0 703 111
- EP-A2- 1 080 974
- EP-A2- 1 083 078
- EP-A2- 1 084 894
- WO-A1-02/40307
- DE-A1- 4 218 804
- DE-A1- 10 159 477
- DE-A1- 19 853 665
- DE-A1- 19 939 065
- DE-C1- 3 514 438

## Beschreibung

Die Erfindung betrifft eine Vorrichtung und ein Verfahren für einen Funktionszugriff in einem Kraftfahrzeug.

Kraftfahrzeuge weisen eine zunehmende Zahl an internen und/oder externen Geräten und Funktionen auf. Derartige Geräte sind beispielsweise veränderbare Fahrzeugsteuergeräte, zuschaltbare Fahrassistenzsysteme. Klimaanlage. Telefon, Navigationssystem etc. Mittels einer Mensch-Maschine-Schnittstelle kann ein Nutzer Funktionen für eine Zugriff auf diese Geräte auswählen. Die Funktionen ermöglichen einen Zugriff zum Lesen von Daten, beispielsweise zum Ablesen einer Motortemperatur, einen Zugriff zur Manipulation von Daten, beispielsweise zum Ändern einer bevorzugten Fahrgastraumtemperatur oder zum Erweitern eines Adressbuch, und/oder einen Zugriff zum Ausführen von Aktionen, beispielsweise ein Zu-oder Abschalten einer Cruise-Control.

Um die Anzahl der Bedien- und/oder Anzeigegeräte gering zu halten, ist es beispielsweise aus der WO 02/40307 A1 bekannt, eine Vielzahl an Geräten für den Zugriff mit einer gemeinsamen Mensch-Maschine-Schnittstelle auszubilden. Funktionen für den Zugriff werden dabei in Gruppen nach Funktionalität zusammengefasst. Derartige Gruppen sind beispielsweise Kommunikationssystem, Navigationssystem, Fahrzeugsteuerungssystem, Unterhaltungssystem und/oder Komfortsystem (Klimaanlage).

Daneben ist es beispielsweise aus der DE 199 39 065 A1 bekannt, Funktionen oder Daten objektbezogen zusammenzufassen.

Die DE 35 14 438 C1 offenbart eine zentrale Bedienungsein- und Informationsausgabe zur Steuerung von mehreren in ein Fahrzeug eingebauten Zusatzgeräten mit einer Anzeigeeinheit, deren Anzeige in Felder zur Darstellung von Informationen und Funktionsauswahltabellen (Menüs) untergliederbar ist sowie mit Bedientasten, die Elementen dargestellter Menüs eindeutig zugeordnet sind, wobei die Elemente der Menüs Funktionen angeben, die durch die jeweiligen Bedientasten anregbar sind und einzelne, ein oder mehrere Zusatzgeräte bedienende Menüs über wenigstens ein auf der Anzeige darstellbares Grundmenü anwählbar sind. Das System umfasst zusätzliche Bedienelemente, mit denen ein direkter Zugriff zu bestimmten Grundfunktionien der zentralen Bedienungsein- und Informationsausgabe und der Zusatzgeräte jederzeit und unabhängig vom augenblicklich angewählten Menü gegeben Ist. Weiter ist auf der Anzeige wenigstens ein persönliches Menü darstellbar, das von einer Bedienperson aus Funktionen anderer Menüs individuell zusammenstellbar ist.

Mit steigendem Funktionsumfang im Kraftfahrzeug sinkt jedoch eine Übersichtlichkeit, da entweder die Anzahl der Funktions- oder Objektgruppen, welche in einzelnen Menüebenen einem Nutzer gleichzeitig zur Verfügung gestellt werden, und/oder eine Menütiefe erhöht werden muss.

Der Erfindung liegt daher das technische Problem zugrunde, ein Verfahren und eine Vorrichtung zu schaffen, welche einen verbesserten Funktionszugriff in einem Kraftfahrzeug mit großem Funktionsumfang ermöglichen.

Die Lösung des Problems ergibt sich durch Gegenstände mit den Merkmalen der Ansprüche 1 und 9. Weitere vorteilhafte Ausgestaltungen der Erfindung ergeben sich aus den Unteransprüchen.

Das Verfahren und die Vorrichtung für einen Funktionszugriff in einem Kraftfahrzeug weist hierzu mindestens ein Komfort-System, ein Steuer-System, ein Unterhaltungs-System und ein Kommunikations-System und mindestens eine Mensch-Maschine-Schnittstelle auf, wobei die Mensch-Maschlne-Schnlttstelle mit mindestens einer Eingabeeinheit, mindestens einer Ausgabeeinheit und mindestens einer Datenbank für Funktionen ausgebildet ist, wobei über die Mensch-Maschine-Schnittstelle mindestens eine persönliche Arbeitsumgebung und fest vorgegebene Arbeitsumgebungen auswählbar sind, wobei die fest vorgegebenen Arbeitsumgebungen mindestens eine Ambitioniert-Arbeitsumgebung und eine Basis-Arbeitsumgebung umfassen, wobei aus der Ambitioniert-Arbeitsumgebung über eine Menüstruktur auf alle Funktionen der Datenbank zugegriffen werden kann, um auf die Systeme zuzugreifen, um Daten zu lesen. Daten zu ändern und/oder Aktionen durchzuführen, wohingegen aus der Basis-Arbeitsumgebung nur auf einen Fahrzeugspezifischen Basisumfang der Funktionen zugegriffen werden kann, wobei jedoch die nicht direkt aus der Basis-Arbeitsumgebung zugänglichen Funktionen jederzeit durch eine Suchumgebung angewählt werden können, wobei die bereitgestellte persönliche Arbeitsumgebung vom Nutzer individuell an seine Bedürfnisse angepasst werden kann, wozu über die Suchumgebung variabel auf die Funktionen der Datenbank zurückgegriffen und der persönlichen Arbeitsumgebung hinzugefügt werden können, wobei aus dererzeugten persönlichen Arbeits-Umgebung ein Zugriff auf die Funktionen im Vergleich zur Ambitioniert-Arbeitsumgebung beschränkt ist und die Ausgabeeinheit mindestens an die Funktionen der persönlichen Arbeitsumgebung angepasst wird, wobei über die Mensch-Maschine-Schnittstelle eine der Arbeitsumgebungen auswählbar ist. Dabei können für einen Nutzer mehrere persönliche Arbeitsumgebungen erzeugt werden, welche beispielsweise gezielt in bestimmten Situationen wählbar sind. So sind unterschiedliche Arbeitsumgebungen eines Nutzers für Freizeit und Bürofahrt denkbar, oder auch eine Anpassung an unterschiedliche Nutzer eines Fahrzeugs. Daneben können auch einem Fahrer und einem Beifahrer eines Fahrzeugs unterschiedliche Funktionsumfänge zur Verfügung gestellt werden.

Die Basis-Arbeitsumgebung ist beispielsweise vom Fahrzeughersteller erzeugbar, und durch einen Nutzer nicht änderbar. Die Basis-Arbeitsumgebung kann dabei derart gestaltet werden, dass sie dem Nutzer hilft, mit dem Fahrzeug vertraut zu werden.

Außer der beispielsweise vom Fahrzeug-Hersteller voreingestellten minimalen Basis- und der maximalen Ambitioniert-Arbeitsumgebung sind weitere voreingestellte Arbeitsumgebungen mit verschiedenen Funktionsumfängen denkbar, welche durch den Hersteller und/oder Dritt-Anbieter und/oder einen Autoverleiher den Bedürfnissen gemäß anpassbar ist. Dabei ist es denkbar, die voreingestellten Arbeitsumgebungen durch einen Code zu schützen, welcher den Zugang durch Unberechtigte verhindert. Daneben ist es auch denkbar, dass beispielsweise eine Autoverleihfirma Zugang zu bestimmten Funktionen für einen Nutzer gezielt freigibt oder sperrt.

In einer bevorzugten Ausführungsform wird eine Assistent-Arbeitsumgebung erzeugt, wobei ein Nutzer verstärkt angeleitet wird. Der Nutzer erhält in der Assistent-Arbeitsumgebung kontextbezogene, ausführliche Unterstützung bei der Bedienung. Die Unterstützung kann beispielsweise als Sprach- und/oder als Textausgabe erfolgen.

In einer weiteren Ausführungsform wird die Ausgabeeinheit und/oder die Funktionen der Arbeitsumgebung an eine Fahrsituation und/oder eine Fahrereignis angepasst. Ist beispielsweise eine Nutzung der Unterhaltungsfunktionen wegen Überschreiten der Schrittgeschwindigkeit untersagt, so kann die Ausgabeeinheit entsprechend verdunkelt werden. Andere Anpassungen der Ausgabeeinheit sind denkbar, beispielsweise ein Anzeigen der Tankuhr bei Unterschreiten einer Mindestfüllhöhe, ein Anzeigen eines Drehzahlmessers bei Überschreiten einer kritischen Drehzahl etc. Eine Vielzahl an Anpassungen können durch das Fahrzeug ohne Nachfrage beim Nutzer selbständig durchgeführt werden. Beispielsweise ein Wechsel auf Intervall-Schaltung des Scheibenwischers an Ampeln oder ein Einschalten des Abblendlichts bei Dunkelheit. Andere Anpassungen sind jedoch nur nach "Rücksprache" mit dem Nutzer sinnvoll. Beispielsweise kann es aufgrund gesetzlicher Vorschriften vorgeschrieben sein, das Abblendlicht auch bei ausreichender Helligkeit eingeschaltet zu lassen. Weiter sind viele Funktionen des Unterhaltungs-Systems beispielsweise für einen Fahrer bei Überschreiten der Schrittgeschwindigkeit zu sperren. Zur Beurteilung der Umgebungsbedingungen sind alle verfügbaren Informationen heranzuziehen. So ist beispielsweise ein Zuschalten eines ABS bei Nässe, ein Umschalten der Automatik von sportlich auf ökonomisch bei verstärktem Verkehrsaufkommen und/oder ein Öffnen des Navigationssystems zum Finden neuer Routen bei Stau denkbar.

Bevorzugt ist die Ausgabeeinheit als freiprogrammierbares Kombidisplay ausgebildet, welches im Sichtbereich des Fahrers und/oder mindestens eines Beifahrers angebracht ist. Ein großes Display in der Mittelkonsole kann dadurch entfallen, wodurch sich neue Gestaltungsmöglichkeiten für den Fahrgastinnenraum ergeben.

In einer weiteren Ausführungsform wird die Eingabeeinheit an die gewählte Arbeitsumgebung angepasst. Beispielsweise ist die Eingabeeinheit als Tastatur, berührungssensitiver Bildschirm, Druck-/Drehknopf und/oder Spracheingabe ausgebildet. Je nach Funktionsumfang und/oder persönlichen Fähigkeiten des Nutzers können verschieden Eingabeeinheiten bevorzugt sein.

In einer weiteren Ausführungsform wird die Eingabeeinheit an eine Fahrsituation und/oder eine Fahrereignis angepasst. So ist es beispielsweise denkbar, ab einer kritischen Geschwindigkeit aus Sicherheitsgründen automatisch auf Spracheingabe umzuschalten. Daneben ist es denkbar, mehrere Eingabeeinheiten alternativ einem Nutzer zur Verfügung zu stellen. Als default ist beispielsweise eine Spracheingabe zu wählen, wobei durch Anwahl einer anderen Eingabeeinheit, beispielsweise einem Druck-/Drehknopf auf dieses gewechselt wird.

In einer bevorzugten Ausführungsform wird auf Funktionen über eine objektorientierte Menüstruktur zugegriffen, dabei wird mindestens ein Objekt gebildet, dem Objekt mindestens eine Eigenschaft und/oder eine Funktion zugeordnet ist und das Objekt in der Datenbank gespeichert. Eine objektbezogene Zusammenfassung hat den Vorteil, dass diese Vielfach der Intuition des Nutzers besser entspricht und daher zu einem verbesserten Verständnis führt. Als "Objekt" wird dabei beispielsweise ein abstrakter Oberbegriff, eine Person und/oder ein Gerät der Fahrzeug-Systeme verstanden. Die Anzeige der Menüstruktur an der Anzeigeinheit erfolgt beispielsweise mit einem Barrel-Panel und/oder mit Navigationsecken.

In einer weiteren Ausführungsform ist die Menütiefe für Objekte der Arbeitsumgebung limitiert. Dadurch wird vermieden, dass der Nutzer Objekte mit großer Menütiefe in das Arbeitsumfeld stellt.

In einer weiteren Ausführungsform ist die Menütiefe für Objekte der Arbeitsumgebung farblich unterlegt. Dadurch ist der Nutzer in der Gestaltung seines persönlichen Arbeitsumfeldes nicht beschränkt, wird aber auf mögliche Unannehmlichkeiten aufgrund der Wahl von Obkejten mit großer Menütiefe hingewiesen.

Die Erfindung ist nachfolgend anhand von Ausführungsbeispielen beschrieben. Die Figuren zeigen:
- Fig.1:: eine schematische Darstellung einer Mensch-Maschine-Schnittstelle,
- Fig.2:: eine schematische Darstellung eines Zugriffs auf eine Datenbank.

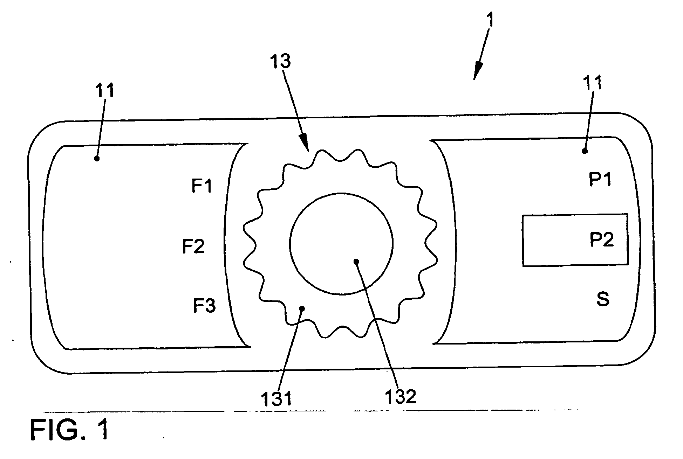

In Fig. 1 Ist schematische eine Mensch-Maschine-Schnittstelle 1 in einem Kraftfahrzeug dargestellt, umfassend eine Ausgabeeinheit 11 und eine mit einem Stellrad 131 und einem Drucktaster 132 ausgebildete Eingabeeinheit 13. Die Ausgabeeinheit 11 ist als zweigeteilte Anzeige, beispielsweise als OLED Anzeige, ausgebildet. Durch die Mensch-Maschine-Schnittstelle 1 sind von einem Nutzer Funktionen zum Ansteuern von Fahrzeugsystemen auswählbar und aufrufbar. Denkbare Fahrzeugsysteme sind beispielsweise ein Kommunikationssystem, ein Navigationssystem, ein Fahrzeugsteuerungssystem, ein Unterhaltungssystem und/oder ein Komfortsystem. Die Beschriftung der Ausgabeeinheit 11 ist an ein Menü für den Zugriff auf das/die jeweilige(n) Fahrzeugsystem(e) anpassbar. Dargestellt ist ein Menü zur Auswahl einer Arbeitsumgebung. Durch die Arbeitsumgebung wird ein Funktionsumfang für den Zugriff auf die vorhandenen Fahrzeugsysteme festgelegt Mögliche Arbeitsumgebungen sind beispielsweise durch einen Hersteller. einen Händler oder einen Dritt-Anbieter fest vorgegebene Arbeitsumgebungen F1, F2 und F3, individuell an persönliche Bedürfnisse anpassbare Arbeitsumgebungen P1, P2 oder eine Suchumgebung S. Zur Wahl einer Arbeitsumgebung wird das Stellrad 131 gedreht, wobei eine ausgewählte Arbeitsumgebung beispielsweise farblich hervorgehoben wird. In der Darstellung ist die Arbeitsumgebung P2 ausgewählt, das durch einen Kasten markiert ist. Durch den Drucktaster 132 wird die Auswahl bestätigt. Alternativ ist auch eine automatische Auswahl nach Ablauf einer vorgegebenen Zeitspanne denkbar, wobei der Druckknopf dann mit weiteren Funktionen, beispielsweise einer Hilfefunktion belegbar ist.

Funktionen und/oder Objekte zum Zugriff auf die Fahrzeugsysteme sind in einer Datenbank der Mensch-Maschine-Schnittstelle gespeichert

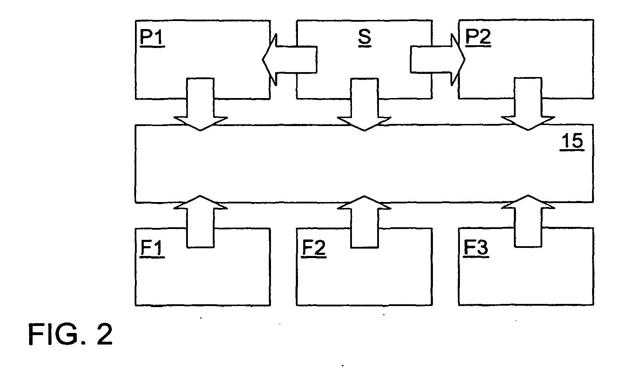

Fig. 2 zeigt schematisch die Datenbank 15 der schematisch in Fig. 1 dargestellten Mensch-Maschine-Schnittstelle 1. Ein Zugriff auf die Datenbank ist durch eine der Arbeitsumgebungen F1, F2, F3, P1, P2 und/oder durch die Suchumgebung S realisierbar.

Bei einem Zugriff über die Suchumgebung S erscheint beispielsweise auf der in Fig. 1 dargestellten Anzeigeeinheit und/oder einer weiteren Anzeigeeinheit ein Prompt, durch welches ein Nutzer aufgefordert wird, eine gewünschte Funktion zu sprechen. Daneben wird dem Nutzer die Möglichkeit zur Verfügung gestellt, die Funktion per Texteingabe oder per Funktionsliste auszuwählen. Bei einer Auswahl über die Funktionsliste werden die Funktionen als Liste dem Nutzer am Bildschirm angezeigt. Durch den in Fig. 1 dargestellten Druck-/Drehknopf ist die Liste blätterbar. Die Funktionen sind in der Liste beispielsweise alphabetisch angeordnet. Daneben ist es auch denkbar, die Liste nach Präferenzen zu ordnen. Vorzugsweise werden die Funktionen gemäß funktionaler Gruppen oder objektbezogen zusammengefasst, um dadurch die Länge der Liste gering zuhalten. Durch eine Texteingabe beispielsweise an einer als Keyboard und/oder als Touchpad ausgebildeten Eingabeeinheit können Funktionen auch direkt angewählt werden. Die Eingabeeinheit ist beispielsweise mit einer Spellerfunktion ausgebildet, durch welche Begriffe automatisch vervollständigt werden.

Über die Suchmaschine ausgewählte Funktionen können den persönlichen Arbeitsumgebungen P1, P2 hinzugefügt werden. Hierfür wird die Suchumgebung beispielsweise aus der Arbeitsumgebung P1, P1 geöffnet und eine gewünschte Funktion per Spracheingabe, Texteingabe und/oder Funktionsliste ausgewählt. Ein Prompt fordert den Nutzer auf zu wählen, ob die Funktion ausgeführt und/oder der Arbeitsumgebung hinzugefügt werden soll. Außer Funktionen können auch funktionale Gruppen und/oder geeignet definierte Objekte der Arbeitsumgebung P1, P2 hinzugefügt werden.

Außer den persönlichen Arbeitsumgebungen P1, P2 stehen dem Nutzer in der dargestellten Ausführungsform fest vorgegebene Arbeitsumgebungen F1, F2, F3 zur Verfügung. Dabei ist die Arbeitsumgebung F1 eine Basis-Arbeitsumgebung, welche nur einen Zugriff auf einen fahrzeugspezifischen Basisumfang der Funktionen und/oder Objekte ermöglicht. Dieser Basis-Umfang ermöglicht es dem Nutzer beispielsweise einen Radio-Sender zu wählen. Dagegen gehört beispielsweise ein Abrufen von e-Mails nicht zu den typischerweise von den meisten Nutzem standardmäßig angewählten Funktionen. Ein Abrufen von e-Mails ist daher nicht direkt aus der Arbeitsumgebung möglich. Die Basis-Arbeitsumgebung kann dabei derart gestaltet werden, dass sie dem Nutzer hilft, mit dem Fahrzeug vertraut zu werden. Sie kann durch einen Fahrzeughersteller, -händler und/oder Dritt-Anbieter geeignet konfiguriert werden. Die in der Arbeitsumgebung nicht direkt zugänglichen Funktionen können jedoch jederzeit durch die Suchumgebung angewählt werden.

Außer der fest eingestellten Basis-Arbeitsumgebung F1 wird dem Nutzer eine Ambitioniert-Arbeitsumgebung F3 zur Verfügung gestellt, durch welche er auf alle Funktionen zugreifen kann. Die Funktionen sind dabei vorzugsweise objektbezogen zusammengefasst, so dass trotz großen Funktionsumfangs eine möglichst intuitive und übersichtliche Menüstruktur vorliegt.

Als weitere fest vorgegebene Arbeitsumgebung wird dem Nutzer eine Assistent-Arbeitsumgebung F2 zur Verfügung gestellt. Der Nutzer erhält in der Arbeitsumgebung F2 kontextbezogene, ausführliche Unterstützung bei der Bedienung. Die Unterstützung erfolgt beispielsweise als Text- und/oder als Sprachausgabe. Die Assistent-Arbeitsumgebung F2 passt sich vorzugsweise an verschiedene Fahrsituationen an und unterstützt den Fahrer dadurch zu jedem Zeitpunkt optimal.

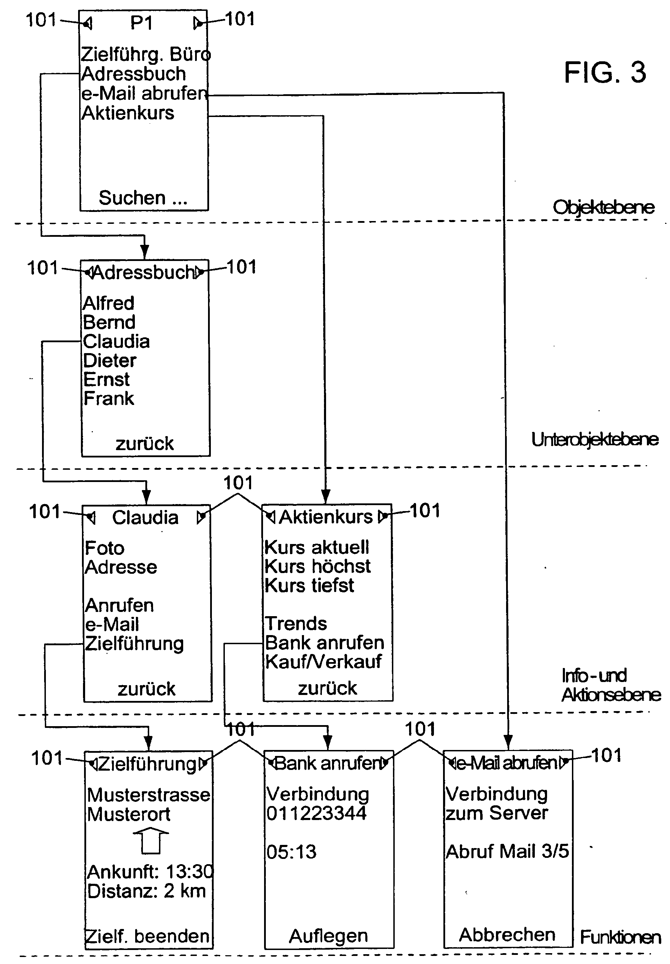

Fig. 3 zeigt die Arbeitsumgebung P1. Die Menütiefe der Arbeitsumgebung P1 ist limitiert auf vier Ebenen, nämlich eine Ebene der Funktionen, eine Info- und Aktionsebene, eine Unterobjektebene und eine Objektebene. Die Objektebene umfasst die Objekte "Adressbuch" und "Aktienkurs" sowie die Funktion "Zielführung Büro" und "e-Mail abrufen". Außerdem kann der Nutzer durch Wahl der Funktion "Suchen" die oben beschriebene Suchumgebung S öffnen.

Durch Wahl des Objektes "Adressbuch" in der Objektebene, wird in der Unterobjektebene das Adressbuch geöffnet. Die im Adressbuch abgelegten Personendaten werden dabei alphabetisch aufgelistet, wobei beispielsweise durch den in Fig. 1 dargestellte, als Druck-/Drehknopf ausgeführte Eingabeeinheit 13 die Adressenliste blätterbar ist. Durch Auswahl der Personenedaten "Claudia" wird die Info- und Aktionsebene geöffnet. Dabei werden alle Daten, welche betreffend "Claudia" abgespeichert wurden, angezeigt. Die Daten sind teilweise reine Informationsdaten, beispielsweise "Foto", teilweise mit Funktionen verknüpft. So ist beispielsweise die Telefonnummer als Information über "Adresse" abfragbar oder mit der Funktion "Anrufen" verknüpftbar. Im dargestellten Beispiel soll eine Zielführung zu dem unter "Adresse" abgespeicherten Ort erfolgen.

Anstelle des Objekts "Adressbuch" ist das Objekt "Aktienkurs" in der obersten Objektebene wählbar. Das Objekt "Aktienkurs" hat eine geringere Menütiefe als das Objekt "Adressbuch", so dass der Nutzer direkt in der Info- und Aktionsebene landet. In der Info- und Aktionsebene kann der Nutzer zwischen verschiedenen Informationen und/oder Aktionen wählen, welche durch den Nutzer und/oder den Hersteller unter dem Begriff "Aktienkurs" als Objekt zusammengefasst wurden. Im Beispiel wird aus den möglichen Optionen die Funktion "Bank anrufen" gewählt und eine Telefonverbindung zur gewünschten Bank aufgebaut.

Außer Objekten wie "Adressbuch", "Claudia" und/oder "Aktienkurs" sind auch Funktionen in der Objektebene ablegbar. Im dargestellten Beispiel sind die Funktionen "Zielführung Büro" und "e-Mail abrufen" in der Objektebene abgelegt. Durch Wahl der entsprechenden Funktion wird direkt in die Funktionsebene geschaltet. Im Beispiel ist die Funktion "e-Mail abrufen" ausgewählt. Die Wahl bewirkt, das eine Verbindung zum entsprechenden Mail-Server aufgebaut wird und die e-Mails des Nutzers abgerufen werden.

Durch die Option "zurück" kann jeweils in die nächsthöhere Ebene gesprungen werden. Außerdem sind Navigationsecken 101 vorhanden, welche eine Vor- und Zurückblättern zwischen den Ebenen erlauben. In der untersten Ebene "Funktionen" ist kein Vorblättern möglich, weshalb die entsprechenden Navigationsecken 101 farblich anders unterlegt sind.

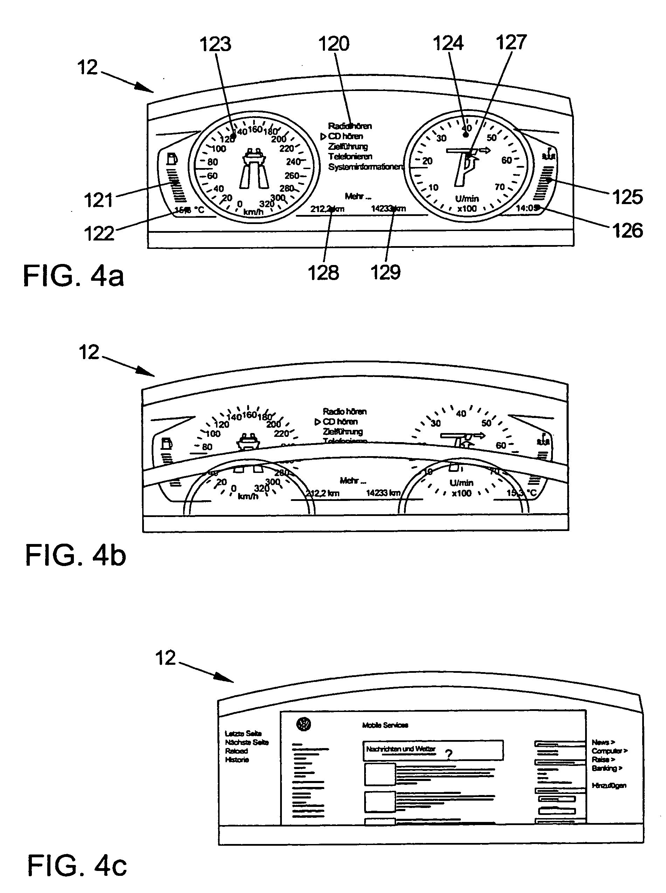

Fig. 4a, b, c zeigen eine zusätzliche und/oder alternative Ausgabeeinheit 12, wie sie nach einer Ausführungsform der Erfindung im Blickfeld eines Fahrers realisiert ist. In Fig. 4a ist die Ausgabeeinheit in einer als "Welcome" bezeichneten Arbeitsumgebung dargestellt. Eine Liste aus der Arbeitsumgebung "Welcome" verfügbarer Funktionen ist in einer Anzeige 120 angeführt. An der Anzeigeeinheit 12 sind in der Arbeitsumgebung "Welcome" außerdem eine Tankanzeige 121, eine Außentemperatur 122, ein Tachometer 123, ein Drehzahlmesser 124, eine Füllstandsanzeige 125, eine Uhrzeit 126, eine Zielführung 127, sowie ein Reisekilometerstand 128 und ein Gesamtkilometerstand 129 enthalten. Fig. 4b zeigt einen Wechsel der Anzeigeeinheit 12 bei einem Übergang der in Fig. 4a dargestellten Arbeitsumgebung "Welcome" zu einer in Fig. 4c dargestellten Arbeitsumgebung "Entertainment". Die Anzeigeeinheit 12 dient in der Arbeitsumgebung "Entertainment" ausschließlich als Bildschirm zum Anzeigen von Entertainmentinformationen. Sämtliche das Fahrzeug betreffende Informationen werden dabei unterdrückt. Selbstverständlich muss sichergestellt werden, dass ein derartiges Umschalten nur in sicheren Fahrzuständen erfolgt, d.h. beispielsweise bei Stillstand, Schrittgeschwindigkeit oder bei Verwendung eines x-bywire-Systems mit Autopiloten.

Einem Beifahrer kann ein entsprechende Kombi-Display zur Verfügung gestellt werden, wodurch platzaufwendige Anzeigeeinheiten in der Mittelkonsole entfallen können.

## Patentansprüche

1. Verfahren für einen Funktionszugriff in einem Kraftfahrzeug, umfassend mindestens ein Komfort-System, ein Steuer-System, ein Unterhaltungs-System und ein Kommunikations-System und mindestens eine Mensch-Maschine-Schnittstelle. (1), wobei die Mensch-Maschine-Schnittstelle (1) mit mindestens einer Eingabeeinheit (13), mindestens einer Ausgabeeinheit (11, 12) und mindestens einer Datenbank (15) für Funktionen ausgebildet ist, wobei über die Mensch-Maschine-Schnittstelle (1) mindestens eine persönliche Arbeitsumgebung (P1, P2) und fest vorgegebene Arbeitsumgebungen auswählbar sind, wobei die fest vorgegebenen Arbeitsumgebungen mindestens eine Ambitioniert-Arbeitsumgebung (F3) und eine Basis-Arbeitsumgebung (F1) umfassen, wobei aus der Ambitioniert-Arbeitsumgebung (F3) über eine Menüstruktur auf alle Funktionen der Datenbank zugegriffen werden kann, um auf die Systeme zuzugreifen, um Daten zu lesen, Daten zu ändern und/oder Aktionen durchzuführen, wohingegen aus der Basis-Arbeitsumgebung (F1) nur auf einen fahrzeugspezifischen Basisumfang der Funktionen zugegriffen werden kann, wobei Jedoch die nicht direkt aus der Basis-Arbeitsumgebung (F1) zugänglichen Funktionen jederzeit durch eine Suchumgebung (S) angewählt werden können, wobei die bereitgestellte persönliche Arbeitsumgebung (P1, P2) vom Nutzer individuell an seine Bedürfnisse angepasst werden kann, wozu über die Suchumgebung (S) variabel auf die Funktionen der Datenbank zurückgegriffen und der persönlichen Arbeitsumgebung hinzugefügt werden können, wobei aus der erzeugten persönlichen Arbeitsumgebung (P1, P2) ein Zugriff auf die Funktionen im Vergleich zur Ambitioniert-Arbeitsumgebung (F3) beschränkt ist und die Ausgabeeinheit (11, 12) mindestens an die Funktionen der persönlichen Arbeitsumgebung (P1, P2) angepasst wird, wobei über die Mensch-Maschine-Schnittstelle (1) eine der Arbeitsumgebungen (F1, F3, P1, P2) ausgewählt wird.

2. Verfahren nach Anspruch 1, **dadurch gekennzeichnet, dass** eine Assistent-Arbeitsumgebung (F2) erzeugt wird, wobei ein Nutzer verstärkt angeleitet wird.

3. Verfahren nach einem Ansprüche 1 oder 2, **dadurch gekennzeichnet, dass** die Ausgabeeinheit (11, 12) und/oder die Funktionen der Arbeitsumgebung an eine Fahrsituation und/oder ein Fahrereignis angepasst wird.

4. Verfahren nach einem der genannten Ansprüche, **dadurch gekennzeichnet, dass** in Abhängigkeit der gewählten Arbeitsumgebung (F1, F2, F3, P1, P2) mindestens eine Eingabeeinheit (13) angepasst wird.

5. Verfahren nach einem der genannten Ansprüche, **dadurch gekennzeichnet, dass** die Eingabeeinheit (13) an eine Fahrsituation und/oder ein Fahrereignis angepasst wird.

6. Verfahren nach einem der genannten Ansprüche, **dadurch gekennzeichnet, dass** auf Funktionen aus der Arbeitsumgebung (F1, F2, F3, P1, P2) über eine objektorientierte Menüstruktur zugegriffen wird, wobei mindestens ein Objekt gebildet wird, dem Objekt mindestens eine Eigenschaft und/oder eine Funktion zugeordnet ist und das Objekt in der Datenbank (15) gespeichert wird.

7. Verfahren nach Anspruch 6, **dadurch gekennzeichnet, dass** die Menütiefe für Objekte der Arbeitsumgebung (F1, F2, F3, P1, P2) limitiert wird.

8. Verfahren nach Anspruch 6 oder 7, **dadurch gekennzeichnet, dass** die Menütiefe für Objekte der Arbeitsumgebung (F1, F2, F3, P1, P2) farblich unterlegt wird.

9. Vorrichtung für einen Funktionszugriff in einem Kraftfahrzeug, umfassend mindestens ein Komfort-System, ein Steuer-System, ein Unterhaltungs-System und ein Kommunikations-System und mindestens eine Mensch-Maschine-Schnittstelle (1), wobei die Mensch-Maschine-Schnittstelle (1) mit mindestens einer Eingabeeinheit (13), mindestens einer Ausgabeeinheit (11,12) und mindestens einer Datenbank (15) für Funktionen ausgebildet ist, wobei über die Mensch-Maschine-Schnittstelle (1) mindestens eine persönliche Arbeitsumgebung (P1, P2) und fest vorgegebene Arbeitsumgebungen auswählbar sind, wobei die fest vorgegebenen Arbeitsumgebungen mindestens eine Ambitioniert-Arbeitsumgebung (F3) und eine Basis-Arbeitsumgebung (F1) umfassen, wobei aus der Ambitioniert-Arbeitsumgebung (F3) über eine Menüstruktur auf alle Funktionen der Datenbank zugegriffen werden kann, um auf die Systeme zuzugreifen, um Daten zu lesen, Daten zu ändern und/oder Aktionen durchzuführen, wohingegen aus der Basis-Arbeitsumgebung (F1) nur auf einen fahrzeugspezifischen Basisumfang der Funktionen zugegriffen werden kann, wobei jedoch die nicht direkt aus der Basis-Arbeitsumgebung (F1) zugänglichen Funktionen jederzeit durch eine Suchumgebung (S) angewähft werden können, wobei die bereitgestellte persönliche Arbeitsumgebung (P1, P2) vom Nutzer individuell an seine Bedürfnisse angepasst werden kann, wozu über die Suchumgebung (S) variabel auf die Funktionen der Datenbank zurückgegriffen und der persönlichen Arbeitsumgebung hinzugefügt werden können, wobei aus der erzeugten persönlichen Arbeitsumgebung (P1, P2) ein Zugriff auf die Funktionen im Vergleich zur Ambitioniert-Arbeitsumgebung (F3) beschränkt ist und die Ausgabeeinheit (11, 12) mindestens an die Funktionen der persönlichen Arbeitsumgebung (P1, P2) angepasst wird, wobei über die Mensch-Maschine-Schnittstelle (1) eine der Arbeitsumgebungen (F1, F3. P1. P2) auswählbar Ist.

10. Vorrichtung nach Anspruch 9, **dadurch gekennzeichnet, dass** eine Assistent-Arbeitsumgebung (F2) existiert, in der eine kontextbezogene, ausführliche Unterstützung erfolgt.

11. Vorrichtung nach einem der Ansprüche 9 oder 10, **dadurch gekennzeichnet, dass** die Ausgabeeinheit (11, 12) und/oder die Funktionen der Arbeitsumgebung an eine Fahrsituation und/oder ein Fahrereignis durch die Mensch-Maschine-Schnittstelle (1) angepasst ist.

12. Vorrichtung nach einem der Ansprüche 9 bis 11, **dadurch gekennzeichnet, dass** mindestens eine Eingabeeinheit (13) an die jeweilige Arbeitsumgebung (F1, F2, F3, P1, P2) angepasst ist.

13. Vorrichtung nach einem der Ansprüche 9 bis 12, **dadurch gekennzeichnet, dass** die Eingabeeinheit (13) an eine Fahrsituation und/oder eine Fahrereignis angepasst ist.

14. Vorrichtung nach einem der Ansprüche 9 bis 13, **dadurch gekennzeichnet, dass** Funktionen aus der Arbeitsumgebung (F1, F2, F3, P1, P2) über eine objektorientierte Menüstruktur zugänglich sind, wobei mindestens ein Objekt bildbar ist, dem Objekt mindestens eine Eigenschaft und/oder eine Funktion zuordenbar ist und das Objekt in der Datenbank (15) gespeichert ist.

15. Vorrichtung nach Anspruch 14, gekennzeichnet, dass die Menütiefe für Objekte einer Arbeitsumgebung (F1, F2, F3, P1, P2) limitiert ist.

16. Vorrichtung nach Anspruch 14 oder 15, **dadurch gekennzeichnet, dass** die Menütiefe für Objekte einer Arbeitsumgebung Arbeitsumgebung (F1, F2, F3, P1, P2) farblich unterlegt ist.

17. Vorrichtung nach einem der Ansprüche 9 bis 16, **dadurch gekennzeichnet, dass** die Eingabeeinheit (13) als Tastatur, berührungssensitiver Bildschirm, Druck-/Drehknopf (131,132) und/oder Spracheingabe ausgebildet ist.

18. Vorrichtung nach einem der Ansprüche 9 bis 17, **dadurch gekennzeichnet, dass** die Ausgabeeinheit (12) als frei programmierbare Kombidisplay ausgebildet ist

## Claims

1. Method for accessing functions in a motor vehicle, comprising at least one comfort system, a control system, an entertainment system and a communication system and at least one man/machine interface (1), wherein the man/machine interface (1) is designed to have at least one input unit (13), at least one output unit (11, 12) and at least one database (15) for functions, wherein the man/machine interface (1) can be used to select at least one personal work environment (P1, P2) and firmly prescribed work environments, wherein the firmly prescribed work environments comprise at least one ambitious work environment (F3) and a basic work environment (F1), wherein the ambitious work environment (F3) allows a menu structure to be used to access all the functions of the database in order to access the systems, in order to read data, to change data and/or to perform actions, whereas the basic work environment (F1) allows only a vehicle-specific basic scope of the functions to be accessed, but wherein the functions that are not directly accessible from the basic work environment (F1) can be preselected at any time by a search environment (S), wherein the personal work environment (P1, P2) provided can be individually adapted by the user to suit his needs, to which end the search environment (S) can be used to resort to the functions of the database on a variable basis and to add said functions to the personal work environment, wherein access to the functions from the personal work environment (P1, P2) produced is limited in comparison with that from the ambitious work environment (F3) and the output unit (11, 12) is adapted at least to suit the functions of the personal work environment (P1, P2), with the man/machine interface (1) being used to select one of the work environments (F1, F3, P1, P2).

2. Method according to Claim 1, **characterized in that** an assistant work environment (F2) is produced, wherein a user is provided with enhanced instructions.

3. Method according to either of Claims 1 and 2, **characterized in that** the output unit (11, 12) and/or the functions of the work environment is/are adapted to suit a driving situation and/or a driving event.

4. Method according to one of the cited claims, **characterized in that** the selected work environment (F1, F2, F3, P1, P2) is taken as a basis for adapting at least one input unit (13).

5. Method according to one of the cited claims, **characterized in that** the input unit (13) is adapted to suit a driving situation and/or a driving event.

6. Method according to one of the cited claims, **characterized in that** functions are accessed from the work environment (F1, F2, F3, P1, P2) using an object-oriented menu structure, wherein at least one object is formed, the object has at least one associated property and/or function and the object is stored in the database (15).

7. Method according to Claim 6, **characterized in that** the menu depth for objects in the work environment (F1, F2, F3, P1, P2) is limited.

8. Method according to Claim 6 or 7, **characterized in that** the menu depth for objects in the work environment (F1, F2, F3, P1, P2) is provided with a coloured background.

9. Apparatus for accessing functions in a motor vehicle, comprising at least one comfort system, a control system, an entertainment system and a communication system and at least one man/machine interface (1), wherein the man/machine interface (1) is designed to have at least one input unit (13), at least one output unit (11, 12) and at least one database (15) for functions, wherein the man/machine interface (1) can be used to select at least one personal work environment (P1, P2) and firmly prescribed work environments, wherein the firmly prescribed work environments comprise at least one ambitious work environment (F3) and a basic work environment (F1), wherein the ambitious work environment (F3) allows a menu structure to be used to access all the functions of the database in order to access the systems, in order to read data, to change data and/or to perform actions, whereas the basic work environment (F1) allows only a vehicle-specific basic scope of the functions to be accessed, but wherein the functions that are not directly accessible from the basic work environment (F1) can be preselected at any time by a search environment (S), wherein the personal work environment (P1, P2) provided can be individually adapted by the user to suit his needs, to which end the search environment (8) can be used to resort to the functions of the database on a variable basis and to add said functions to the personal work environment, wherein access to the functions from the personal work environment (P1, P2) produced is limited in comparison with that from the ambitious work environment (F3) and the output unit (11, 12) is adapted at least to suit the functions of the personal work environment (P1, P2), with the man/machine interface (1) being able to be used to select one of the work environments (F1, F3, P1, P2).

10. Apparatus according to Claim 9, **characterized in that** an assistant work environment (F2) exists in which context-related, extensive assistance is provided.

11. Apparatus according to either of Claims 9 and 10, **characterized in that** the output unit (11, 12) and/or the functions of the work environment has/have been adapted to suit a driving situation and/or a driving event by the man/machine interface (1).

12. Apparatus according to one of Claims 9 to 11, **characterized in that** at least one input unit (13) has been adapted to suit the respective work environment (F1, F2, F3, P1, P2).

13. Apparatus according to one of Claims 9 to 12, **characterized in that** the input unit (13) has been adapted to suit a driving situation and/or a driving event.

14. Apparatus according to one of Claims 9 to 13, **characterized in that** functions are accessible from the work environment (F1, F2, F3, P1, P2) using an object-oriented menu structure, wherein at least one object can be formed, the object can have at least one property and/or function associated with it and the object has been stored in the database (15).

15. Apparatus according to Claim 14, **characterized in that** the menu depth for objects in a work environment (F1, F2, F3, P1, P2) has been limited.

16. Apparatus according to Claim 14 or 15, **characterized in that** the menu depth for objects in a work environment (F1, F2, F3, P1, P2) has been provided with a coloured background.

17. Apparatus according to one of Claims 9 to 16, **characterized in that** the input unit (13) is in the form of a keyboard, a touch sensitive screen, a pushbutton/rotary knob (131, 132) and/or voice input.

18. Apparatus according to one of Claims 9 to 17, **characterized in that** the output unit (12) is in the form of a user-programmable combined display.

## Revendications

1. Procédé d'accès à des fonctions dans un véhicule automobile, comprenant au moins un système de confort, un système de commande, un système de divertissement et un système de communication et au moins une interface homme-machine (1), dans lequel l'interface homme-machine (1) est conçue de manière à comporter au moins une unité d'entrée (13), au moins une unité de sortie (11, 12) et au moins une base de données (15) de fonctions, dans lequel au moins un environnement de travail personnel (P1, P2) et des environnements de travail prédéterminés de manière fixe peuvent être sélectionnés par l'intermédiaire de l'interface homme-machine (1), dans lequel les environnements de travail prédéterminés de manière fixe comprennent au moins un environnement de travail souhaité (F3) et un environnement de travail de base (F1), dans lequel il est possible d'accéder à toutes les fonctions de la base de données par le biais d'une structure de menu à partir de l'environnement de travail souhaité (F3) pour accéder aux systèmes, pour lire des données, pour modifier des données et/ou pour effectuer des actions, alors qu'il n'est possible d'accéder qu'à un périmètre de base des fonctions spécifique du véhicule à partir de l'environnement de travail de base (F1), dans lequel les fonctions auxquelles il n'est pas possible d'accéder directement à partir de l'environnement de travail de base (F1) peuvent cependant être sélectionnées à tout moment par l'intermédiaire d'un environnement de recherche (S), dans lequel l'environnement de travail personnel fourni (P1, P2) peut être adapté individuellement par l'utilisateur selon ses besoins, ce pour quoi il est possible d'accéder de nouveau de manière variable aux fonctions de la base de données et de les ajouter à l'environnement de travail personnel par l'intermédiaire de l'environnement de recherche (S), dans lequel un accès aux fonctions à partir de l'environnement de travail personnel (P1, P2) généré est limité par comparaison à l'environnement de travail souhaité (F3) et l'unité de sortie (11, 12) est adaptée au moins aux fonctions de l'environnement de travail personnel (P1, P2), dans lequel l'un des environnements de travail (F1, F3, P1, P2) est sélectionné par l'intermédiaire de l'interface homme-machine (1).

2. Procédé selon la revendication 1, **caractérisé en ce qu'**un environnement de travail d'assistance (F2) est généré, au moyen duquel un utilisateur est guidé de manière renforcée.

3. Procédé selon l'une quelconque des revendications 1 ou 2, **caractérisé en ce que** l'unité de sortie (11, 12) et/ou les fonctions de l'environnement de travail est/sont adaptée(s) à une situation de conduite et/ou à un événement de conduite.

4. Procédé selon l'une quelconque des revendications précédentes, **caractérisé en ce qu'**au moins une unité d'entrée (13) est adaptée en fonction de l'environnement de travail (F1, F2, F3, P1, P2) sélectionné.

5. Procédé selon l'une quelconque des revendications précédentes, **caractérisé en ce que** l'unité d'entrée (13) est adaptée à une situation de conduite et/ou à un événement de conduite.

6. Procédé selon l'une quelconque des revendications précédentes, **caractérisé en ce qu'**un accès est effectué aux fonctions à partir de l'environnement de travail (F1, F2, F3, P1, P2) par l'intermédiaire d'une structure de menu orientée objet, dans lequel au moins un objet est construit, au moins une propriété et/ou une fonction est associée à l'objet et l'objet est stocké dans la base de données (15).

7. Procédé selon la revendication 6, **caractérisé en ce que** la profondeur du menu est limitée pour des objets de l'environnement de travail (F1, F2, F3, P1, P2).

8. Procédé selon la revendication 6 ou 7, **caractérisé en ce que** la profondeur du menu est surlignée de manière colorée pour des objets de l'environnement de travail (F1, F2, F3, P1, P2).

9. Dispositif d'accès à des fonctions dans un véhicule automobile, comprenant au moins un système de confort, un système de commande, un système de divertissement et un système de communication et au moins une interface homme-machine (1), dans lequel l'interface homme-machine (1) est conçue de manière à comporter au moins une unité d'entrée (13), au moins une unité de sortie (11, 12) et au moins une base de données (15) de fonctions, dans lequel au moins un environnement de travail personnel (P1, P2) et des environnements de travail prédéterminés de manière fixe peuvent être sélectionnés par l'intermédiaire de l'interface homme-machine (1), dans lequel les environnements de travail prédéterminés de manière fixe comprennent au moins un environnement de travail souhaité (F3) et un environnement de travail de base (F1), dans lequel il est possible d'accéder à toutes les fonctions de la base de données par le biais d'une structure de menu à partir de l'environnement de travail souhaité (F3) pour accéder aux systèmes, pour lire des données, pour modifier des données et/ou pour effectuer des actions, alors qu'il n'est possible d'accéder qu'à un périmètre de base des fonctions spécifique du véhicule à partir de l'environnement de travail de base (F1), dans lequel les fonctions auxquelles il n'est pas possible d'accéder directement à partir de l'environnement de travail de base (F1) peuvent cependant être sélectionnées à tout moment par l'intermédiaire d'un environnement de recherche (S), dans lequel l'environnement de travail personnel fourni (P1, P2) peut être adapté individuellement par l'utilisateur selon ses besoins, ce pour quoi il est possible d'accéder de nouveau de manière variable aux fonctions de la base de données et de les ajouter à l'environnement de travail personnel par l'intermédiaire de l'environnement de recherche (S), dans lequel un accès aux fonctions à partir de l'environnement de travail personnel (P1, P2) généré est limité par comparaison à l'environnement de travail souhaité (F3) et l'unité de sortie (11, 12) est adaptée au moins aux fonctions de l'environnement de travail personnel (P1, P2), dans lequel l'un des environnements de travail (F1, F3, P1, P2) peut être sélectionné par l'intermédiaire de l'interface homme-machine (1).

10. Dispositif selon la revendication 9, **caractérisé en ce qu'**il existe un environnement de travail d'assistance (F2) dans lequel une assistance détaillée dépendant du contexte est effectuée.

11. Dispositif selon l'une quelconque des revendications 9 ou 10, **caractérisé en ce que** l'unité de sortie (11, 12) et/ou les fonctions de l'environnement de travail est/sont adaptée(s) à une situation de conduite et/ou à un événement de conduite par l'intermédiaire de l'interface homme-machine (1).

12. Dispositif selon l'une quelconque des revendications 9 à 11, **caractérisé en ce qu'**au moins une unité d'entrée (13) est adaptée à l'environnement de travail (F1, F2, F3, P1, P2) respectif.

13. Dispositif selon l'une quelconque des revendications 9 à 12, **caractérisé en ce que** l'unité d'entrée (13) est adaptée à une situation de conduite et/ou à un événement de conduite.

14. Dispositif selon l'une quelconque des revendications 9 à 13, **caractérisé en ce qu'**un accès est effectué à des fonctions à partir de l'environnement de travail (F1, F2, F3, P1, P2) par l'intermédiaire d'une structure de menu orientée objet, dans lequel au moins un objet peut être construit, au moins une propriété et/ou une fonction peut être associée à l'objet et l'objet est stocké dans la base de données (15).

15. Dispositif selon la revendication 14, **caractérisé en ce que** la profondeur du menu est limitée pour des objets d'un environnement de travail (F1, F2, F3, P1, P2).

16. Dispositif selon la revendication 14 ou 15, **caractérisé en ce que** la profondeur du menu est surlignée de manière colorée pour des objets d'un environnement de travail (F1, F2, F3, P1, P2).

17. Dispositif selon l'une quelconque des revendications 9 à 16, **caractérisé en ce que** l'unité d'entrée (13) est réalisée sous la forme d'un clavier, d'un écran tactile, d'un bouton-poussoir ou tournant (131, 132) et/ou d'une entrée vocale.

18. Dispositif selon l'une quelconque des revendications 9 à 17, **caractérisé en ce que** l'unité de sortie (12) est réalisée sous la forme d'un afficheur combiné programmable.
